(19) 

Europäisches
Patentamt
European
Patent Office
Office européen
des brevets

(11) **EP 4 109 593 A1**

(12) **EUROPEAN PATENT APPLICATION**
published in accordance with Art. 153(4) EPC

(43) Date of publication:
**28.12.2022 Bulletin 2022/52**

(21) Application number: **21821483.1**

(22) Date of filing: **28.05.2021**

(51) International Patent Classification (IPC):
*H01M 4/134* (2010.01)     *H01M 4/62* (2006.01)
*H01M 4/38* (2006.01)     *H01M 10/052* (2010.01)

(52) Cooperative Patent Classification (CPC):
**H01M 4/134; H01M 4/38; H01M 4/62;**
**H01M 10/052; Y02E 60/10**

(86) International application number:
**PCT/KR2021/006661**

(87) International publication number:
**WO 2021/251663 (16.12.2021 Gazette 2021/50)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **11.06.2020 KR 20200071071**

(71) Applicant: **LG Energy Solution, Ltd.**
**Seoul 07335 (KR)**

(72) Inventors:
• **KIM, Young Jae**
  **Daejeon 34122 (KR)**
• **YOO, Jung Woo**
  **Daejeon 34122 (KR)**

(74) Representative: **Hoffmann Eitle**
**Patent- und Rechtsanwälte PartmbB**
**Arabellastraße 30**
**81925 München (DE)**

(54) **ANODE AND SECONDARY BATTERY COMPRISING SAME**

(57)     The present invention relates to an anode comprising: an anode current collector; and an anode active material layer formed on the anode current collector, the anode active material layer containing a silicone-based active material, a binder, a first conductive material, and a second conductive material, wherein: the specific surface area of the second conductive material is larger than that of the first conductive material; and the anode active material layer contains 9.68 wt% to 9.83 wt% of the first conductive material and 0.17 wt% to 0.32 wt% of the second conductive material.

**EP 4 109 593 A1**

Processed by Luminess, 75001 PARIS (FR)

**Description**

**TECHNICAL FIELD**

[Cross Reference to Related Application]

This application claims the benefit of priority based on Korean Patent Application No. 10-2020-0071071 filed on June 11, 2020, the entire contents of which are incorporated herein by reference.

[Technical Field]

The present invention relates to a negative electrode and a secondary battery comprising the same.

**BACKGROUND ART**

In recent years, along with the fast spread of electronic devices using batteries such as mobile phones, notebook computers, and electric vehicles, demand for secondary batteries that are small in size, light in weight, and relatively high in capacity has rapidly increased. In particular, a lithium secondary battery is light in weight and has a high energy density, and is receiving attention as a driving power source of a portable device. Accordingly, research and development efforts for improving the performance of lithium secondary batteries have been actively pursued.

Generally, lithium secondary batteries include a positive electrode, a negative electrode, a separator interposed between the positive electrode and the negative electrode, an electrolyte, an organic solvent, etc. Further, in the positive electrode and the negative electrode, an active material layer containing the positive electrode active material or the negative electrode active material may be formed on a current collector. A lithium-containing metal oxide such as $LiCoO_2$ or $LiMn_2O_4$ is generally used as a positive electrode active material for the positive electrode, and thus a carbon-based active material or silicon-based active material containing no lithium is used as a negative electrode active material for the negative electrode.

Among the negative electrode active materials, a silicon-based active material has attracted attention in that it has a capacity as high as about 10 times as that of a carbon-based active material and have excellent high-speed charging characteristics. However, the silicon-based active material has a large degree of volume expansion/contraction due to charging/discharging, and there is a problem that an electrical short circuit between the active materials is likely to occur as charging/discharging is repeated, and the lifetime characteristics of the negative electrode are deteriorated. When a binder is used in a large amount to suppress this, it is difficult to realize a desired high capacity electrode, and resistance is increased, so it is not widely used.

Korean Patent Publication No. 10-0794192 relates to a method for preparing a carbon-coated silicon-graphite composite negative electrode material for a lithium secondary battery and a method for preparing a secondary battery comprising the same, but there is a limitation in solving the above problems.

[Prior Art Document]

[Patent Document]

Korean Patent Publication No. 10-0794192

**DETAILED DESCRIPTION OF THE INVENTION**

**TECHNICAL PROBLEM**

An object of the present invention is to provide a secondary battery that exhibits improved capacity characteristics, lifetime characteristics, and fast charging characteristics.

**TECHNICAL SOLUTION**

The present invention provides a negative electrode comprising: a negative electrode current collector; and a negative electrode active material layer formed on the negative electrode current collector, wherein the negative electrode active material layer comprises a silicon-based active material, a binder, a first conductive material, and a second conductive material; a specific surface area of the second conductive material is larger than a specific surface area of the first conductive material; the first conductive material is contained in the negative electrode active material layer in an amount of 9.68 % by weight to 9.83 % by weight; and the second conductive material is contained in the negative electrode active material layer in an amount of 0.17 to 0.3 2 % by weight.

The present invention also provides a secondary battery comprising the above-described negative electrode; a positive electrode opposite to the negative electrode; a separator interposed between the negative electrode and the positive electrode; and an electrolyte.

## ADVANTAGEOUS EFFECTS

The negative electrode of the present invention is a negative electrode using a silicon-based active material, and is characterized by containing specific contents of a conductive material having a small specific surface area (a first conductive material) and a conductive material having a large specific area (a second conductive material). The first conductive material allows the conductive network to be preferably maintained between the active materials even when the silicon-based active material undergoes volume expansion/contraction through charging/discharging. In addition, the second conductive material can be adsorbed on the surface of the silicon-based active material to improve the conductivity of the surface of the silicon-based active material. Therefore, the negative electrode in which the first conductive material and the second conductive material are contained in specific contents can improve the lifetime characteristics by preventing damage to the conductive network due to the volume expansion/contraction of the silicon-based active material and the electrical short circuit between the active materials, and the excellent capacity characteristics and the fast charging characteristics of the silicon-based active material can be preferably realized.

## MODES OF THE INVENTION

The terms or words used in the specification and claims should not be construed as being limited to ordinary or dictionary meanings, and should be construed as a meaning and concept that complies with the technical concept of the present invention given the principle that the inventors can appropriately define the concepts of the terms in order to explain their own invention in the best way.

The terminology used herein is used for the purpose of describing exemplary embodiments only and is not intended to be limiting of the invention. The articles "a" and "an" include plural referents unless the context clearly dictates otherwise.

In this specification, the terms "comprising", "including", "having" etc. are intended to designate the presence of the implemented features, numbers, steps, components, or combinations thereof, and are not to be understood as precluding the possibility of the presence or addition of one or more other features or numbers, steps, components or combinations thereof.

In the present specification, the average particle diameter ($D_{50}$) can be defined as a particle diameter corresponding to 50 % of the cumulative volume in the particle diameter distribution curve of the particles. The average particle diameter ($D_{50}$) can be measured using, for example, a laser diffraction method. The laser diffraction method generally enables measurement of a particle diameter of from a submicron region to about several millimeters, and results of high reproducibility and high resolvability can be obtained.

## <Negative Electrode>

The present invention relates to a negative electrode, specifically, a negative electrode for a lithium secondary battery.

Specifically, the negative electrode of the present invention includes a negative electrode current collector; and a negative electrode active material layer formed on the negative electrode current collector, wherein the negative electrode active material layer includes a silicon-based active material, a binder, a first conductive material, and a second conductive material; a specific surface area of the second conductive material is larger than a specific surface area of the first conductive material; the first conductive material is contained in the negative electrode active material layer in an amount of 9.68 % by weight to 9.83 % by weight; and the second conductive material is contained in the negative electrode active material layer in an amount of 0.17 to 0.3 2 % by weight.

Conventionally, a silicon-based active material has advantages of high capacity and fast charging characteristics, but since the silicon-based active material has a large degree of volume expansion/contraction due to charging/discharging, and as charging and discharging continues, the active materials in the negative electrode lose contact with each other, and thus it is difficult to transfer lithium between active materials, and there are problems of lithium precipitation and fast deterioration of lifetime characteristics.

In order to solve such problems, the negative electrode of the present invention is a negative electrode using a silicon-based active material and is characterized in that it contains specific contents of a conductive material having a small specific surface area (a first conductive material) and a conductive material having a large specific area (a second conductive material). The first conductive material allows the conductive network between the active materials to be preferably maintained even when the silicon-based active material undergoes volume expansion/contraction through charging/discharging. In addition, the second conductive material can be adsorbed on the surface of the silicon-based active material to improve the conductivity of the silicon-based active material surface. Therefore, the negative electrode in which the first conductive material and the second conductive material are contained in specific contents can improve the lifetime characteristics by preventing damage to the conductive network due to the volume expansion/contraction of the silicon-based active material and the electrical short circuit between the active materials, and the excellent capacity characteristics and the fast charging characteristics of the silicon-based active material can be preferably realized.

The negative electrode current collector may include at least one selected from copper, stainless steel, aluminum, nickel, titanium, calcined carbon, and an aluminum-cadmium alloy, and preferably may include copper.

The thickness of the negative electrode current collector may typically range from 3 μm to 500 μm, preferably from 5 to 30 μm.

The negative electrode current collector may be formed with fine irregularities on its surface to enhance the binding force of the negative electrode active material. For example, a negative electrode current collector in various forms, such as a film, a sheet, a foil, a net, a porous body, a foam, a nonwoven fabric etc., may be used.

The negative electrode active material layer is formed on the negative electrode current collector. Specifically, the negative electrode active material layer may be formed on at least one surface of the negative electrode current collector, specifically, on one surface or both surfaces of the negative electrode current collector.

The negative electrode active material layer contains a silicon-based active material, a binder, and a conductive material.

The silicon-based active material may contain a compound represented by the following Chemical formula 1.

[Chemical formula 1]        SiOx

In the Chemical formula 1, $0 \leq x < 2$. In the case of $SiO_2$, it does not react with lithium ions and cannot store lithium. Therefore, x is preferably within the above range.

Specifically, the silicon-based active material may contain Si. Conventionally, Si is advantageous in that the capacity is about 2.5 to 3 times higher than that of silicon oxide (e.g. $SiO_x$ ($0<x<2$)), but the degree of volume expansion/contraction due to charging/discharging of Si is very high in comparison with silicon oxide, so that it is not more easily commercialized. However, in the case of the secondary battery of the present invention, even when a silicon-based active material containing Si is used, the charging potential of the active material can be lowered to a desirable level, and therefore, it is possible to improve the high capacity and the fast charging characteristics of the silicon-base active material while preventing the deterioration of the lifetime characteristics. Specifically, the silicon-based active material may be mostly composed of Si, and more specifically, the silicon-based active material may be made of Si.

The average particle diameter ($D_{50}$) of the silicon-based active material may range from 1 μm to 10 μm, preferably from 2μm to 6 μm from the viewpoint of making the active material structurally stable during charging/discharging and making it possible to form a conductive network for maintaining electrical conductivity more smoothly, or making it easier to access the binder for binding the active material and the current collector.

The silicon-based active material may be contained in the negative electrode active material layer in an amount of 75 % by weight to 89 % by weight, preferably 80 % by weight to 88 % by weight from the viewpoint of sufficiently realizing a secondary battery with a high capacity of the silicon-based active material while minimizing an influence of volume expansion/contraction of the silicon-based active material on the battery.

The negative electrode active material layer includes a first conductive material and a second conductive material.

The specific surface area of the second conductive material is larger than that of the first conductive material.

The negative electrode of the present invention is characterized by containing a conductive material having a small specific surface area (a first conductive material) and a conductive material having a large specific surface area (a second conductive material) in a specific weight ratio. Specifically, the first conductive material (a conductive material having a small specific surface area) can keep the conductive network between the active materials even when the active material undergoes volume expansion/contraction by charging/discharging, and the second conductive material (a conductive material having a large specific surface area) can be well adsorbed on the surface of active material due to its large specific surface, and thus can improve the conductivity of the silicon-based active material.

The first conductive material is contained in the negative electrode active material layer in the amount of 9.68 % by weight to 9.83 % by weight. When the first conductive material is used in an amount of less than 9.68 % by weight, the conductive network maintenance effect of the active material cannot be sufficiently exhibited. Further, when the first conductive material is used in an amount of more than 9.83 % by weight, the conductive network maintenance effect is improved, but the improvement in overall conductivity in the negative electrode is insignificant as the content of the first conductive material, which is a conductive material having a small specific surface area, is increased, and it is not preferable from the viewpoint of ensuring capacity because the amount of the active material in the positive electrode is reduced.

The first conductive material may preferably be included in the negative electrode active material layer in an amount of 9.77 % by weight to 9.83 % by weight, more preferably 9.77 % by weight to 9.79 % by weight. When the above range is satisfied, the conductive network between the silicon-based active materials can be maintained even when charging/discharging is continued, so that the lifetime characteristics can be further improved, and at the same time, excellent fast charging performance of the silicon-based active material can be more easily secured.

The specific surface area of the first conductive material may be from 5 $m^2/g$ to 40 $m^2/g$, preferably from 7 $m^2/g$ to 30 $m^2/g$, and more preferably from 10 $m^2/g$ to 20 $m^2/g$. When the specific surface area of the first conductive material satisfies the above range, the first conductive material can be smoothly disposed between the active materials because the dispersibility of the first conductive material is excellent during production of a negative electrode and the viscosity of the negative electrode slurry is prevented from being excessively high, whereby the effect of maintaining the conductive network can be improved, and the conductivity between the active materials can be improved to an excellent level.

The specific surface area of the first conductive material may be defined as a value measured by a nitrogen adsorption method (BET specific surface area).

The first conductive material may contain at least one selected from the group consisting of graphite and carbon black, and more preferably contains graphite from the viewpoint of having an appropriate level of specific surface area, strength, etc., having an excellent conductive network maintenance effect, and being excellent in dispersibility and workability during production of a negative electrode. The graphite may be at least one selected from artificial graphite and natural graphite.

The first conductive material may be plate-like. When the first conductive material is in the form of a plate, contact with the active material is excellent when the first conductive material is disposed between active materials, and the effect of maintaining the conductive network between the active materials can be more smoothly exhibited. More preferably, the first conductive material may include platy graphite.

The aspect ratio of the first conductive material may be 1.1 to 30.0, preferably 1.2 to 6.0, more preferably 1.5 to 3.5. When the first conductive material has an aspect ratio in the above-described range, even when the silicon-based active material expands/shrinks in volume, it is possible to keep the shape of the first conductive material well, and thus it is more preferable to maintain the conductive network between the silicon-based active materials. In the present specification, the aspect ratio of the first conductive material may be defined as "major axis length of the first conductive material/minor axis length of the first conductive material".

The average particle diameter ($D_{50}$) of the first conductive material may range from 1 μm to 20 μm, preferably from 2 μm to 12 μm, more preferably from 2.5 μm to 4.5 μm, and further preferably from 3 μm to 4 μm. When the average particle diameter ($D_{50}$) of the first conductive material is within the above range, the conductive network between the active materials may be easily maintained even when the silicon-based active material undergoes volume expansion/contraction, and the lifetime performance of the negative electrode can be improved.

The ratio of the average particle diameter ($D_{50}$) of the silicon-based active material to the average particle diameter of the first conductive material may be 1:1 to 1:5, preferably 1:1 to 1:2, more preferably 1:1.4 to 1:1.7. When the above range is satisfied, it is preferable because the first conductive material can maintain the conductive network between the active materials even when the distance between the active materials is large due to the volume expansion/contraction of the silicon-based active material in the negative electrode.

The second conductive material is contained in the negative electrode active material layer at 0.17 % by weight to 0.32 % by weight. When the second conductive material is contained in the negative electrode active material layer in an amount of less than 0.17 % by weight, it may be difficult to ensure conductivity of the surface of the silicon-based active material due to the use of an excessively small amount of the second conductive material, such that the conductivity of active material may decrease, and thus the lifetime characteristics may rapidly decrease. In addition, the second conductive material may also contribute to the formation of a conductive network between silicon-based active materials in addition to the surface of the silicon-based active material, but it is difficult to expect such an effect when the content of the second conductive material is too small.

In addition, when the second conductive material is contained in the negative electrode active material layer in an amount of more than 0.32 % by weight, it is difficult to easily disperse and prevent agglomeration during production of a negative electrode due to the use of an excessive amount, making it difficult to secure the conductivity of the silicon-based active material, and a problem of a local increase in resistance due to the difficulty of uniform distribution of the second conductive material may occur, and there is a problem that the conductivity on the surface of silicon-based active material is lowered to deteriorate the lifetime characteristics, which is not preferable.

The second conductive material may preferably be contained in the negative electrode active material layer at 0.17 % by weight to 0.23 % by weight, more preferably 0.21 % by weight to 0.23 % by weight. When the content is within the above range, the conductivity of the surface of the silicon-based active material is improved, and at the same time, the dispersibility of the second conductive material can be improved during production of the negative electrode, and the second conductive material can be distributed at a uniform level in the negative electrode so that the lifetime characteristics of the negative electrode are further improved and the excellent fast charging performance of the silicon-based active material can be more easily exhibited.

The specific surface area of the second conductive material may range from 400 $m^2/g$ to 1,000 $m^2/g$, preferably from 450 $m^2/g$ to 700 $m^2/g$. As the specific surface area of the second conductive material satisfies the above-described range, it is possible to allow the second conductive material to be well adsorbed on the surface of the silicon-based active material so that the excellent conductivity can be imparted to the surface of the silicon-based active material.

The specific surface area of the second conductive material may be defined as a value measured by a nitrogen adsorption method (BET specific surface area).

The second conductive material may contain at least one selected from single-walled carbon nanotubes (SWCNTs) and multi-walled carbon nanotubes (MWCNTs), and may preferably contain single-walled carbon nanotubes from the viewpoint of excellent conductivity and excellent adsorption to the silicon-based active material.

The diameter of the second conductive material may be 0.1 nm to 20 nm, preferably 1 nm to 5 nm, and when the diameter is within the above range, the second conductive material can be stably adsorbed on the surface of the silicon-based active material, which is preferable. In addition, from the viewpoint of the content of the second conductive material described above, when the second conductive material has a diameter in the above range, it is preferable because a sufficient amount of second conductive material may be present in the negative electrode, and thus the second conductive material can be uniformly distributed in the negative electrode active material layer.

In the present specification, the diameter of the second conductive material is measured by the following method. A solution obtained by adding the second conductive material and carboxymethyl cellulose (CMC) to water in a weight ratio of 40:60 (the solid content is 1 % by weight based on the total weight of the solution) is diluted 1,000 times with water. One drop of the diluted solution is dropped on a TEM grid, and the TEM grid is dried. The dried TEM grid is observed with a TEM instrument (product name: H7650, manufactured by Hitachi) to measure the average diameter of the second conductive material.

The second conductive material may have a length ranging from 1 $\mu$m to 50 $\mu$m, preferably from 10 $\mu$m to 20 $\mu$m, and when the above range is satisfied, smooth adsorption or contactability of the active material surface due to the long fiber length of the second conductive material can be improved. In addition, from the viewpoint of the content of the second conductive material described above, when the second conductive material has a length within the above range, it is preferable because a sufficient amount of second conductive material may be present in the negative electrode and can be uniformly distributed within the negative electrode.

In the present specification, the length of the second conductive material is measured by the following method. A solution obtained by adding the second conductive material and carboxymethyl cellulose to water in a weight ratio of 40:60 (the solid content is 1 % by weight based on the total weight of the solution) is diluted 1,000 times with water. 20 ml of the diluted solution is then filtered through a filter and the filter on which the SWCNT aggregates are filtered is dried. One hundred sheets of the dried filter are photographed with a scanning electron microscope (SEM), the length of the second conductive material is measured using an ImageJ program, and the average value of the lengths can be defined as the length of the second conductive material.

The aspect ratio of the second conductive material may be 5,000 to 15,000, preferably 8,000 to 12,000. When the above range is satisfied, the conductive network by the second conductive material can be stably maintained without being damaged by rolling of the electrode or by volume expansion of the negative electrode active material, and can be smoothly attached to the surface of the silicon-based active material, which is preferable. In addition, from the viewpoint of the content of the second conductive material described above, when the aspect ratio is in the above range, a sufficient amount of second conductive material may be present in the negative electrode, the second conductive material in the negative electrode can be uniformly distributed, and adsorption or coatability on the surface of the silicon-based active material can be improved, which is preferable. The aspect ratio of the second conductive material may be defined as "length of the second conductive material/diameter of the second conductive material".

The first conductive material and the second conductive material may be included in the negative electrode active material layer at a weight ratio of 96.8:3.2 to 98.3:1.7, preferably 97.7:2.3 to 98.3:1.7 and more preferably 97.7:2.3 to 97.9:2.1. When the above range is satisfied, it is possible to improve the conductivity of the surface of the silicon-based active material, and at the same time, even when charging and discharging are continued, the conductive network between the silicon based active materials can be maintained, and the lifetime characteristics can be further improved, and at the same time, it is possible to more easily secure the excellent fast charging performance of the silicon based active material.

As the first conductive material and the second conductive material are included in the negative electrode active material layer in the above-described contents, the conductive material can be evenly distributed within the negative electrodes while improving the conductivity of the silicon-based active material to an excellent level, and maintenance of the conductive network between the active materials can be preferably achieved. Therefore, the negative electrode of the present invention and the secondary battery including the same are excellent in lifetime characteristics, and excellent fast charging performance and capacity characteristics of the silicon-based active material can be preferably realized.

The binder is a component that promotes binding between the active material and the conductive material and binding to the current collector.

The binder may include at least one selected from the group consisting of styrene butadiene rubber (SBR), acrylonitrile butadiene rubber, acrylic rubber, butyl rubber, fluoro rubber, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM).

Preferably, the binder may include at least one selected from the group consisting of polyvinyl alcohol, polyacrylic acid, polyacrylonitrile and polyacryl amide, preferably polyvinyl alcohol and polyacrylic acid from the viewpoint of high strength, excellent resistance to volume expansion/contraction of the silicon-based active material, and imparting excellent flexibility to the binder to prevent warping, bending, etc. of the electrode. When the binder includes polyvinyl alcohol and polyacrylic acid, the binder may be a copolymer of polyvinyl alcohol and polyacrylic acid, specifically a copolymer of polyvinyl alcohol and polyacrylic acid including a vinyl alcohol-derived unit and an acrylic acid-derived unit in a weight ratio of 50:50 to 90:10, preferably 55:45 to 80:20.

The binder may include a binder in which hydrogen in the binder is substituted with Li, Na, Ca or the like from the viewpoint of making the binder more well dispersed in an aqueous solvent such as water during preparation of the slurry for forming the negative electrode active material layer and more smoothly covering the active material to improve the binding force.

The binder may be contained in the negative electrode active material layer in an amount of 1 to 15 % by weight, preferably 2 to 10 % by weight and, and when the amount is in the above range, the silicon-based active material can be smoothly bound to minimize the problem of volume expansion of the active material, and at the same time, the binder can be easily dispersed during the preparation of a slurry for forming the negative electrode active material layer, and the coatability and the phase stability of the slurry can be improved.

The thickness of the negative electrode active material layer may be 10 $\mu$m to 100 $\mu$m, preferably between 20 $\mu$m to 50 $\mu$m. In this specification, the thickness of the negative electrode active material layer may be a thickness of a single negative electrode active material layer formed on one surface of a negative electrode current collector.

The porosity of the negative electrode may be 28 % to 50 %, and preferably 32 % to 40 %, and when the porosity is in the above range, it is possible to appropriately accommodate the volume expansion/contraction of the silicon-based active material while maintaining the degree of contact between the active materials at an appropriate level to improve conductivity.

The porosity of the negative electrode herein can be calculated by the following equation 2:

[Equation 2]

$$\text{Porosity (\%) of negative electrode} = \{1 - (\text{electrode density of negative electrode/true density of negative electrode})\} \times 100$$

In the above Equation 2, the true density of the negative electrode is a density of a negative electrode active material layer measured when the negative electrode is provided at a certain size and is pressed by a pressing device until the thickness of the negative electrode does not change, and the electrode density of this negative electrode refers to the density of a negative electrode active material layer measured by providing the negative electrode at a certain size.

**<Negative Electrode Slurry>**

The present invention also provides a negative electrode slurry. The negative electrode slurry may be applied onto a negative electrode current collector to form the negative electrode described above. Specifically, the negative electrode can be prepared by applying the negative electrode slurry on the negative electrode current collector and drying and rolling it.

The negative electrode slurry contains silicon-based active material, a binder, a first conductive material, and a second conductive material; the specific surface area of the second conductive material is larger than that of the first conductive material; the first conductive material are contained in an amount of 9.68 % by weight to 9.83 % by weight based on the solid content; and the second conductive material is contained in an amount of 0.17 % by weight to 0.32 % by weight based on the solid content.

The negative electrode slurry is characterized in that two kinds of conductive material having different specific surface areas (the first conductive material and the second conductive material) are contained in specific contents, and thus, the first and second conductive materials can be uniformly distributed in the slurry without occurrence of a clumping phenomenon, and the first and second conductive materials are uniformly distributed in the negative electrode upon production of a negative electrode, so that the conductive network at the silicon-based active material surface and between the active materials can be smoothly maintained.

The description of the silicon-based active material, the binder, the first conductive material, and the second conductive material may be the same as described in the negative electrode described above.

The negative electrode slurry may further include a solvent for forming the negative electrode slurry. The solvent for forming the negative electrode slurry may contain, for example, at least one selected from the group consisting of distilled water, ethanol, methanol and isopropyl alcohol, preferably distilled water from the viewpoint of facilitating the dispersion of the silicon-based active material, the binder and the conductive material.

The solvent for forming a negative electrode slurry may be contained in the negative electrode slurry so that the concentration of the solid content in the negative electrode slurry ranges from 15 % by weight to 45 % by weight, preferably from 20 % by weight to 30 % by weight in consideration of the viscosity, coatability, dispersibility, etc. of the negative electrode slurry.

The viscosity of the negative electrode slurry at 25 °C may range from 4,200 cP to 8,500 cP, preferably from 4,800 cP to 7,200 cP, more preferably from 5,200 cP to 6,800 cP, and more preferably 6,000 cP to 6,600 cP. When the viscosity is in the above range, the problem of sedimentation of the negative electrode slurry due to an excessively low viscosity can be prevented, a problem of deterioration of coatability and workability such as mixing can be avoided due to an excessively high viscosity, and the dispersibility of the above-described first conductive material and the second conductive material is improved, whereby it is possible to produce a negative electrode having improved lifetime characteristics and fast charging performance.

The viscosity of the negative electrode slurry at 25 °C may be the viscosity of a negative electrode slurry that has been rotated at a 1,500 shear rate (1/s) for at least 250 seconds using a viscometer or the like and then allowed to rest for 80 to 120 seconds. Specifically, the viscosity of the negative electrode slurry at 25 °C may be that of a negative electrode slurry that has been rotated for 300 seconds at a 1,500 shear rate (1/s) using a viscometer or the like, and then allowed to rest for 100 seconds.

## <Secondary Battery>

The present invention provides a secondary battery, specifically a lithium secondary battery. Specifically, the secondary battery may include the above-described negative electrode.

Specifically, the secondary battery may include a negative electrode; a positive electrode opposite to the negative electrode; a separator interposed between the negative electrode and the positive electrode; and an electrolyte. The negative electrode may be the negative electrode described above.

The positive electrode may include a positive electrode current collector and a positive electrode active material layer formed on the positive electrode current collector.

The positive electrode current collector is not particularly limited as long as it has high conductivity without causing a chemical change in the battery. Specifically, as the positive electrode current collector, copper, stainless steel, aluminum, nickel, titanium, calcined carbon, or copper or stainless steel whose surface is treated with carbon, nickel, titanium or silver, an aluminum-cadmium alloy or the like may be used.

The positive electrode current collector may typically have a thickness of 3 to 500 $\mu$m.

The positive electrode current collector may be formed with fine irregularities on the surface to enhance the binding force of the positive electrode active material. For example, a positive electrode current collector in various forms such as a film, a sheet, a foil, a net, a porous body, a foam, a nonwoven fabric etc., may be used.

The positive electrode active material layer may contain a positive electrode active material.

The positive electrode active material is a compound capable of reversible intercalation and deintercalation of lithium, and may specifically include a lithium-transition metal composite oxide containing lithium and at least one transition metal selected from nickel, cobalt, manganese, and aluminum, preferably a lithium-transition metal composite oxide including lithium and a transition metal including nickel, cobalt, and manganese.

More specifically, examples of the lithium-transition metal composite oxide include lithium-manganese-based oxides (e.g., $LiMnO_2$, $LiMn_2O_4$, etc.), lithium-cobalt-based oxides (e.g., $LiCoO_2$, etc.), lithium-nickel-based oxides (e.g., $LiNiO_2$, etc.), lithium-nickel-manganese-based oxides (e.g., $LiNi_{1-Y}Mn_YO_2$ (wherein, 0<Y<1), $LiMn_{2-z}Ni_zO_4$ (wherein, 0<Z<2), etc.), lithium-nickel-cobalt-based oxides (e.g., $LiNi_{1-Y1}Co_{Y1}O_2$ (wherein, 0<Y1<1), etc.), lithium-manganese-cobalt-based oxides ($LiCo_{1-Y2}Mn_{Y2}O_2$ (wherein, 0<Y2<1), $LiMn_{2-z1}Co_{z1}O_4$ (wherein, 0<Z1<2), etc.), lithium-nickel-manganese-cobalt-based oxides (e.g., $Li(Ni_pCo_qMn_{r1})O_2$ (wherein, 0<p<1, 0<q<1, 0<r1<1, p+q+r1=1) or $Li(Ni_{p1}Co_{q1}Mn_{r2})O_4$ (wherein, 0<p1<2, 0<q1<2, 0<r2<2, p1+q1+r2=2), etc.), or lithium-nickel-cobalt-transition metal (M) oxides (e.g., $Li(Ni_{p2}Co_{q2}Mn_{r3}M_{S2})O_2$ (wherein, M is selected from a group consisting of Al, Fe, V, Cr, Ti, Ta, Mg and Mo, p2, q2, r3 and s2 are each atomic fractions of independent elements, $0<p2<1$, $0<q2<1$, $0<r3<1$, $0<s2<1$, p2+q2+r3+s2=1), etc.), any one or two or more of these compounds may be included. Among these, from the viewpoint that the capacity characteristics and stability of the battery can be enhanced, the lithium-transition metal composite oxide may be $LiCoO_2$, $LiMnO_2$, $LiNiO_2$, lithium nickel-manganese-cobalt oxides (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$, etc.), or lithium-nickel-cobalt-aluminum oxides (e.g., $Li(Ni_{0.8}Co_{0.15}Al_{0.05})O_2$, etc.), and from the viewpoint of the remarkable improvement effect due to the control of the kind and content ratio of the constituent elements forming the lithium transition metal composite oxides, the lithium transition metal composite oxides may include $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$, and any one or a mixture of two or more of them may be used.

The positive electrode active material may be contained at 80 % by weight to 99 % by weight, and preferably 92 % by weight to 98.5 % by weight in the positive electrode active material layer in consideration of the sufficient capacity of the positive electrode material.

The positive electrode active material layer may further include a binder and/or a conductive material in combination with the positive electrode active material described above.

The binder is a component that promotes binding between the active material and the conductive material and binding to the current collector, and may specifically contain at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylenediene terpolymer (EPDM), a sulfonated EPDM, styrene-butadiene rubber and fluoro rubber, preferably polyvinylidene fluoride.

The binder may be contained in the positive electrode active material layer in an amount of 1 % by weight to 20 % by weight, preferably 1.2 % by weight to 10 % by weight from the viewpoint of sufficiently ensuring the binding force between the components such as the positive electrode active material.

The conductive material can be used to assist and improve conductivity in the secondary battery, and is not particularly limited as long as it has conductivity without causing a chemical change. Specifically, the conductive material may contain at least one selected from the group consisting of graphite such as natural graphite and artificial graphite; carbon black such as carbon black, acetylene black, Ketjen black, channel black, furnace black, lamp black and thermal black; conductive fibers such as a carbon fiber and a metal fiber; conductive tubes such as a carbon nanotube; fluorocarbons; metal powders such as aluminum and nickel powder; conductive whiskers such as zinc oxide and potassium titanate; conductive metal oxides such as titanium oxide; and polyphenylene derivatives, and preferably includes carbon black from the viewpoint of improving conductivity.

The conductive material may have a specific surface area of 80 to 200 $m^2/g$, preferably 100 to 150 $m^2/g$, from the viewpoint of facilitating the dispersion of the conductive material during the preparation of the slurry for forming the positive electrode active material layer and further improving conductivity.

The conductive material may be contained in the positive electrode active material layer in an amount of 1 % by weight to 20 % by weight, preferably 1.2 % by weight to 10 % by weight from the viewpoint of ensuring sufficient electrical conductivity.

The thickness of the positive electrode active material layer may be from 30 $\mu$m to 400 $\mu$m, preferably from 50 to 110 $\mu$m.

The positive electrode can be prepared by applying a positive electrode slurry containing a positive electrode active material and, optionally, a binder, a conductive material, and a solvent for forming positive electrode slurries on the negative electrode current collector, followed by drying and rolling.

The solvent for forming the positive electrode slurry may include an organic solvent such as N-methyl-2-pyrrolidone (NMP), and may be used in an amount to impart a desirable viscosity when the positive electrode slurry includes the above positive electrode active material, and optionally a binder, a conductive material etc. For example, the solvent for forming the positive electrode slurry may be included in the positive electrode slurry such that the concentration of the solid content including the positive electrode active material, and optionally the binder and the conductive material, is 50 % by weight to 95 % by weight, preferably 70 % by weight to 90 % by weight.

The porosity of the positive electrode active material layer may be between 20 % and 35 %. The porosity of the positive electrode active material layer can be measured using the method of measuring the porosity of a negative electrode active material layer of the above-described Equation 2.

The separator separates the negative electrode and the positive electrode to provide a path for migration of lithium ions, and may be used without particular limitation as long as it is usually used as a separator in a lithium secondary battery, and in particular, it is preferable that the separator is excellent in electrolyte impregnation ability while being low in resistance to ion migration of an electrolyte. Specifically, a porous polymer film, for example, porous polymer films made of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. Further, a conventional porous nonwoven fabric, for example, a nonwoven fabric made of glass fiber or polyethylene terephthalate fiber having a high melting point may be used. In addition, coated separators including ceramic components or polymeric material may be used to ensure heat resistance or mechanical strength, and may optionally be used in a single-layer or multilayer structure.

Examples of the electrolyte used in the present invention include, but are not limited to, an organic liquid electrolyte, an inorganic liquid electrolytes, a solid polymer electrolyte, a gel-type polymer electrolyte, a solid inorganic electrolyte and a melt-type inorganic electrolyte which can be used in production of a secondary battery.

Specifically, the electrolyte may include an organic solvent and a lithium salt.

The organic solvent may be used without particular limitation as long as it can serve as a medium in which ions involved in the electrochemical reaction of the battery can migrate. Specifically, as the organic solvent, an ester-based solvent such as methyl acetate, ethyl acetate, gamma-butyrolactone, $\varepsilon$-caprolactone or the like; an ether-based solvent, such as dibutyl ether, tetrahydrofuran or the like; a ketone-based solvent, for example, cyclohexanone or the like; an aromatic hydrocarbon solvent, e.g., benzene, fluorobenzene, or the like; a carbonate-based solvent such as dimethyl carbonate (DMC), diethyl carbonate (DEC), methyl ethyl carbonate (MEC), ethylene carbonate (EC), propylene carbonate (PC), or the like; an alcoholbased solvent such as ethyl alcohol, isopropyl alcohol or the like; a nitrile such as R-CN (R is a C2 to C20 linear, branched, or cyclic hydrocarbon group, which may contain a double bond aromatic ring or an ether bond); an amide such as dimethylformamide or the like; a dioxolane such as 1,3-dioxolane or the like; or sulfolane may be used. Among these, a carbonate-based solvent is preferable, and a mixture of a cyclic carbonate (e.g., ethylene carbonate or propylene carbonate) having high ion conductivity and a high dielectric constant and a linear carbonate compound having low viscosity (such as ethyl methyl carbonate, dimethyl carbonate or diethyl carbonate) capable of increasing the charging/discharging performance of a battery is more preferable. In this case, when the cyclic carbonate and the chain carbonate are mixed and used in a volume ratio of about 1:1 to about 1:9, the performance of the electrolytic solution can be excellent.

The lithium salt may be used without particular limitation as long as it is a compound capable of providing lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used. The concentration of the lithium salt is preferably in the range of 0.1 to 2.0 M. When the concentration of the lithium salt is included in the above range, the electrolyte has appropriate conductivity and viscosity, and thus can exhibit excellent electrolyte performance, and lithium ions can move effectively.

In the secondary battery of the present invention, the N/P ratio calculated by the following Equation 1 may be 2 to 3, preferably 2.4 to 2.8.

[Equation 1]

N/P ratio = {(discharge capacity per unit area of the negative electrode) /

(discharge capacity per unit area of the positive electrode)}.

When the ratio is within the above range, the effect of the volume expansion/contraction of the silicon-based active material on the battery can be minimized, and the lifetime characteristics of the secondary battery can further be improved, while the high capacity and the fast charging characteristics of a silicon-based active material can be exhibited.

The secondary battery can be prepared by interposing a separator between the above-described negative electrode and positive electrode and then injecting an electrolytic solution according to a typical method for producing a secondary battery.

The secondary battery according to the present invention is useful in the fields of portable devices such as mobile phones, notebook computers and digital cameras, electric vehicles such as hybrid electric vehicles (HEV), etc., and particularly, may be preferably used as a constituent battery of a medium- or large-sized battery module. Accordingly, the present invention also provides a medium- or large-sized battery module including such a secondary battery as a unit battery.

Such a medium- or large-sized battery module may be preferably applied to a power source requiring high output and high capacity, such as an electric vehicle, a hybrid electric vehicle and a power storage device.

Hereinafter, examples of the present invention will be described in detail to enable those skilled in the art to easily carry out the invention. However, the present invention may be embodied in many different forms and is not limited to the examples described herein.

**Examples**

<Manufacture of Negative Electrode>

Example 1: Manufacture of Negative Electrode

Si (average particle diameter ($D_{50}$): 2.3 $\mu$m) as a silicon-based active material, a first conductive material, a second conductive material and a copolymer of polyvinyl alcohol and polyacrylic acid as a binder (containing a vinyl alcohol-derived unit and an acrylic acid-derived unit at 66:34, weight-average molecular weight: about 360,000 g/mol) were added to distilled water as a solvent for forming a negative electrode slurry in a weight ratio of 85.00:9.78:0.22:5.00 to prepare a negative electrode slurry (solid content concentration: 25 % by weight).
The first conductive material was plate-like graphite (specific surface area: 17 m$^2$/g, average particle diameter ($D_{50}$): 3.5 $\mu$m, aspect ratio: 1.95), and the second conductive material was a single-walled carbon nanotube (specific surface area: 520 m$^2$/g, diameter: 0.0015 $\mu$m (1.5 nm), length: 15 $\mu$m and aspect ratio; 10,000).
On both sides of a copper current collector (thickness: 15 $\mu$m) as a negative electrode current collector, the negative electrode slurry was applied at a loading amount of 80.5 mg/25cm$^2$, roll-pressed, and dried in a vacuum oven at 130 °C for 10 hours to form a negative electrode active material layer (thickness: 29 $\mu$m), which was used as a negative electrode (thickness of negative electrode: 44 $\mu$m, porosity of negative electrode: 38.0 %).

Example 2: Manufacture of Negative Electrode

A negative electrode of Example 2 was produced in the same manner as in Example 1 except that the negative electrode slurry was formed by mixing the silicon-based active material, the first conductive material, the second conductive material and the binder at a weight ratio of 85.0:9.8:0.2:5.0.

Comparative Example 1: Manufacture of Negative Electrode

A negative electrode of Comparative Example 1 was prepared in the same manner as in Example 1 except that the negative electrode slurry was formed by mixing the silicon-based active material, the first conductive material, the second conductive material and the binder at a weight ratio of 85.00:9.96:0.04:5.00.

Comparative Example 2: Manufacture of Negative Electrode

A negative electrode of Comparative Example 2 was produced in the same manner as in Example 1 except that the negative electrode slurry was formed by mixing the silicon-based active material, the first conductive material, the second conductive material and the binder at a weight ratio of 85.00:9.92:0.08:5.00.

Comparative Example 3: Manufacture of Negative Electrode

A negative electrode of Comparative Example 3 was produced in the same manner as in Example 1 except that the negative electrode slurry was formed by mixing the silicon-based active material, the first conductive material, the second conductive material and the binder at a weight ratio of 85.00:9.88:0.12:5.00.

Comparative Example 4: Manufacture of Negative Electrode

A negative electrode of Comparative Example 4 was produced in the same manner as in Example 1 except that the negative electrode slurry was formed by mixing the silicon-based active material, the first conductive material, the second conductive material and the binder at a weight ratio of 85.00:9.86:0.14:5.00.

Comparative Example 5: Manufacture of Negative Electrode

A negative electrode of Comparative Example 5 was produced in the same manner as in Example 1 except that the negative electrode slurry was formed by mixing the silicon-based active material, the first conductive material, the second conductive material and the binder at a weight ratio of 85.00:9.57:0.43:5.00.

Comparative Example 6: Manufacture of Negative Electrode

A negative electrode of Comparative Example 6 was produced in the same manner as in Example 1 except that the negative electrode slurry was formed by mixing the silicon-based active material, the first conductive material and the binder at a weight ratio of 85:10:5 without using the second conductive material.

Comparative Example 7: Manufacture of Negative Electrode

A negative electrode of Comparative Example 7 was prepared in the same manner as in Example 1 except that the negative electrode slurry was formed by mixing the silicon-based active material, the second conductive material and the binder at a weight ratio of 94:1:5 without using the first conductive material.

Table 1

| | First Conductive Material | | | Second Conductive Material | | |
|---|---|---|---|---|---|---|
| | Content (% by weight, based on weight of negative electrode active material layer) | Specific Surface Area ($m^2/g$) | Aspect Ratio | Content (% by weight, based on weight of negative electrode active material layer) | Specific Surface Area ($m^2/g$) | Aspect Ratio |
| Example 1 | 9.78 | 17 | 1.95 | 0.22 | 520 | 10,000 |
| Example 2 | 9.80 | 17 | 1.95 | 0.20 | 520 | 10,000 |
| Comparative Example 1 | 9.96 | 17 | 1.95 | 0.04 | 520 | 10,000 |
| Comparative Example 2 | 9.92 | 17 | 1.95 | 0.08 | 520 | 10,000 |
| Comparative Example 3 | 9.88 | 17 | 1.95 | 0.12 | 520 | 10,000 |
| Comparative Example 4 | 9.86 | 17 | 1.95 | 0.14 | 520 | 10,000 |
| Comparative Example 5 | 9.57 | 17 | 1.95 | 0.43 | 520 | 10,000 |
| Comparative Example 6 | 10 | 17 | 1.95 | 0 | - | - |
| Comparative Example 7 | 0 | - | - | 1 | 520 | 10,000 |

<Manufacture of Secondary Battery>

1. Manufacture of Secondary Battery

A positive electrode slurry was prepared by adding Li[Ni$_{0.6}$Co$_{0.2}$Mn$_{0.2}$]O$_2$ (average particle diameter (D$_{50}$): 15 $\mu$m) as a positive electrode active material, carbon black (product name: Super C65, manufactured by Timcal) as an conductive material, and polyvinylidene fluoride (PVdF) as the binder at a weight ratio of 97:1.5:1.5 to N-methyl-2-pyrrolidone (NMP), which is a solvent for forming a positive electrode slurry (solid content concentration: 78 % by weight).
On both sides of an aluminum current collector (thickness: 12 $\mu$m) as a positive electrode current collector, the positive electrode slurry was applied at a loading amount of 450 mg/25 cm$^2$, roll-pressed, and dried in a vacuum oven at 130 °C for 10 hours to form a positive electrode active material layer (thickness: 54 $\mu$m), thereby producing a positive electrode (thickness of positive electrode: 66 $\mu$m, porosity: 24 %).
A polyethylene separator was interposed between the positive electrode and the negative electrode of Example 1 and an electrolyte was injected to produce a secondary battery of Example 1.
The electrolyte was obtained by adding vinylene carbonate at 3 % by weight based on the total weight of the electrolyte to an organic solvent in which fluoroethylene carbonate (FEC) and diethyl carbonate (DMC) were mixed at a volume ratio of 30:70, and adding LiPF$_6$ as a lithium salt at a concentration of 1 M.
The secondary batteries of Example 2 and Comparative Examples 1 to 7 were produced in the same manner as in Example 1 except that the negative electrodes of the above-described Example 2 and Comparative Examples 1-7 were used.

2. N/P ratio measurement and calculation of secondary battery

A coin-type half-cell containing a negative electrode of Example 1, a lithium metal counter electrode opposite to the negative electrode, a polyethylene separator interposed between the negative electrode and the lithium metal counter electrode, and an electrolyte was produced and the discharge capacity was determined (units: mAh/g). The discharge capacity was multiplied by the loading amount to obtain the discharge capacity per unit area of the negative electrode of Example 1 (units: mAh/cm$^2$).

In addition, a coin-type half-cell containing the positive electrode prepared above, a lithium metal counter electrode opposite to the positive electrode, a polyethylene separator interposed between the positive electrode and the lithium metal counter electrode, and an electrolyte was produced and the discharge capacity was determined (units: mAh/g). The discharge capacity was multiplied by the loading amount to obtain the discharge capacity per unit area of the positive electrode (units: mAh/cm$^2$).

The N/P ratio of the secondary battery of Example 1 was determined by the following equation 1 (N/P ratio = 2.76).

[Equation 1]

$$\text{N/P ratio} = \{(\text{discharge capacity per unit area of the negative electrode}) / (\text{discharge capacity per unit area of the positive electrode})\}.$$

The N/P ratio of the secondary batteries of Example 2 and Comparative Examples 1 to 7 was determined in the same manner as in Example 1 except that the negative electrodes of Example 2 and Comparative Examples 1-7 were used.

The results are shown in Table 2.

Table 2

|  | N/P ratio |
|---|---|
| Example 1 | 2.76 |
| Example 2 | 2.69 |
| Comparative Example 1 | 2.67 |
| Comparative Example 2 | 2.65 |
| Comparative Example 3 | 2.68 |
| Comparative Example 4 | 2.68 |
| Comparative Example 5 | 2.63 |
| Comparative Example 6 | 2.66 |
| Comparative Example 7 | 2.67 |

**Experimental Examples**

**Experimental Example 1: Measurement of Resting Viscosity of Negative Electrode Slurry**

The resting viscosities of the negative electrode slurries prepared in Examples 1 and 2 and Comparative Examples 1 to 7 were measured. The resting viscosity was measured using a viscometer (product name: HAAKE viscometer, manufactured by ThermoFisher Scientific).

Specifically, 5 mL of the negative electrode slurries prepared in Examples 1-2 and Comparative Examples 1-7 were prepared, and the negative electrode slurry was put in the viscometer, rotated at a 1,500 shear rate (1/s) at 25 °C for 300 seconds, then, the rotation was stopped and the viscosity after resting for 100 seconds was measured.

Table 3

|  | Resting Viscosity (cP @ 25 °C) |
|---|---|
| Example 1 | 6,420 |
| Example 2 | 5,880 |
| Comparative Example 1 | 2,550 |
| Comparative Example 2 | 2,570 |
| Comparative Example 3 | 3,110 |
| Comparative Example 4 | 3,860 |
| Comparative Example 5 | 16,800 |
| Comparative Example 6 | 1,560 |
| Comparative Example 7 | 11,830 |

Referring to Table 3, it can be confirmed that the negative electrode slurries of Examples 1 and 2 exhibit a favorable level of resting viscosity as compared with Comparative Examples, and that the active material, the first conductive material, a second conductive material and a binder are smoothly dispersed. However, it can be confirmed that the negative electrode slurries of Comparative Examples 1 to 7 have an excessively low or high resting viscosity. When the resting viscosity is too low, there is a risk of slurry sedimentation, and when the resting viscosity is too high, there may be a risk that coatability is lowered, and difficulty in transfer of the slurry makes it difficult to produce a negative electrode, which may affect the lifetime characteristics of the negative electrode as described later.

**Experimental Example 2: Evaluation of Cycle Capacity Retention Rate**

The capacity retention rate of the secondary batteries produced in Examples 1 and 2 and Comparative Examples 1 to 7 was evaluated using an electrochemical charger/discharger.

The secondary battery was charged and discharged to the 100th cycle under charging (1.0 C CC/CV charging 4.2 V 0.05 C cut) and discharging (0.5 C CC discharge 3.2 V cut) conditions.

The capacity retention rate was evaluated by the following formula. The results are shown in Table 4 below.

$$\text{Capacity retention rate (\%)} = \{(\text{discharge capacity at 100th cycle}) / (\text{discharge capacity at first cycle})\} \times 100$$

Table 4

|  | Cycle Capacity Retention Rate (%) @ 100cycle |
|---|---|
| Example 1 | 93.9 |
| Example 2 | 92.0 |
| Comparative Example 1 | 74.4 |
| Comparative Example 2 | 75.8 |
| Comparative Example 3 | 81.3 |
| Comparative Example 4 | 86.6 |
| Comparative Example 5 | 87.4 |
| Comparative Example 6 | 70.8 |
| Comparative Example 7 | 69.1 |

Referring to Table 4, it can be seen that the secondary batteries of Examples 1 and 2 in which the first conductive material and the second conductive material were added in a preferable amount in the negative electrode exhibited a superior level of cycle capacity retention rate as compared to the Comparative Examples.

**Experiment Example 3: Evaluation of Fast Charging Lifespan**

With respect to the secondary batteries produced in Examples 1 and 2 and Comparative Examples 1 to 7, the capacity retention rate during fast charging was evaluated using an electrochemical charger/discharger. The secondary battery was subjected to 1) charging (0.2C CC/CV charging 4.2V 0.05C cut) and discharging (0.2C CC discharge 3.2V cut), which is the first cycle, and 2) charging and discharging to the 100th cycle from the second cycle under charging (2.0 C CC/CV charging 4.2 V 0.05C cut) and discharging (0.5C CC discharge 3.2V cut) conditions.
The capacity retention rate was evaluated by the following formula. The results are shown in Table 5 below.

$$\text{Capacity retention rate (\%)} = \{(\text{discharge capacity at 100th cycle})/(\text{discharge capacity at first cycle})\}\times 100$$

Table 5

|  | Cycle Capacity Retention Rate (%) @ 100th cycle |
| --- | --- |
| Example 1 | 74.2 |
| Example 2 | 72.4 |
| Comparative Example 1 | 57.3 |
| Comparative Example 2 | 57.6 |
| Comparative Example 3 | 63.4 |
| Comparative Example 4 | 66.7 |
| Comparative Example 5 | 67.3 |
| Comparative Example 6 | 53.8 |
| Comparative Example 7 | 51.8 |

Referring to Table 5, it can be seen that the secondary batteries of Examples 1 and 2, in which the first conductive material and the second conductive material were added in a preferable amount in the negative electrode, exhibited excellent levels of fast charging characteristics as compared with the comparative examples.

**Claims**

1. A negative electrode, comprising:

   a negative electrode current collector; and
   a negative electrode active material layer formed on the negative electrode current collector,
   wherein the negative electrode active material layer comprises a silicon-based active material, a binder, a first conductive material, and a second conductive material,
   a specific surface area of the second conductive material is larger than a specific surface area of the first conductive material,
   the first conductive material is contained in the negative electrode active material layer in an amount of 9.68 % by weight to 9.83 % by weight, and
   the second conductive material is contained in the negative electrode active material layer in an amount of 0.17 % by weight to 0.32 % by weight.

2. The negative electrode according to claim 1, wherein the specific surface area of the first conductive material is 5

m$^2$/g to 40 m$^2$/g.

3. The negative electrode according to claim 1, wherein the first conductive material comprises at least one selected from the group consisting of graphite and carbon black.

4. The negative electrode according to claim 1, wherein an average particle diameter ($D_{50}$) of the first conductive material is 1 $\mu$m to 20 $\mu$m.

5. The negative electrode according to claim 1, wherein an aspect ratio of the first conductive material is 1.1 to 30.0.

6. The negative electrode according to claim 1, wherein a specific surface area of the second conductive material is 400 m$^2$/g to 1,000 m$^2$/g.

7. The negative electrode according to claim 1, wherein the second conductive material comprises at least one selected from single-walled carbon nanotubes and multi-walled carbon nanotubes.

8. The negative electrode according to claim 1, wherein an aspect ratio of the second conductive material is 5,000 to 15,000.

9. The negative electrode according to claim 1, wherein the silicon-based active material is contained in an amount of 75 % by weight to 89 % by weight.

10. The negative electrode according to claim 1, wherein an average particle diameter ($D_{50}$) of the silicon-based active material is 1 $\mu$m to 10 $\mu$m.

11. The negative electrode according to claim 1, wherein a ratio of an average particle diameter ($D_{50}$) of the silicon-based active material to an average particle diameter ($D_{50}$) of the first conductive material is 1:1 to 1:5.

12. The negative electrode according to claim 1, wherein the binder comprises at least one selected from the group consisting of styrene-butadiene rubber, acrylonitrilebutadiene rubber, acrylic rubber, butyl rubber, fluoro rubber, carboxymethyl cellulose, starch, hydroxypropyl cellulose, polyvinyl alcohol, polyacrylic acid, polyethylene glycol, polyacrylonitrile, and polyacryl amide.

13. The negative electrode according to claim 1, wherein the binder is contained in the negative electrode active material layer in an amount of 1 % by weight to 15 % by weight.

14. A secondary battery, comprising:

the negative electrode according to claim 1;
a positive electrode opposite to the negative electrode;
a separator interposed between the negative electrode and the positive electrode; and
an electrolyte.

<div align="center">**INTERNATIONAL SEARCH REPORT**</div>

| International application No. |
|---|
| **PCT/KR2021/006661** |

| A. | CLASSIFICATION OF SUBJECT MATTER |
|---|---|

**H01M 4/134**(2010.01)i; **H01M 4/62**(2006.01)i; **H01M 4/38**(2006.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

H01M 4/134(2010.01); B01J 23/02(2006.01); B01J 37/08(2006.01); C01B 31/02(2006.01); C01B 33/02(2006.01); H01M 10/052(2010.01); H01M 4/1393(2010.01); H01M 4/1395(2010.01); H01M 4/36(2006.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘계 활물질(silicon-based active material), 음극(anode), 도전재(conducting agent), 비표면적(specific surface area), 도전 경로(conductive path), 리튬 이차 전지(lithium secondary battery)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0027787 A (LG CHEM, LTD.) 13 March 2020 (2020-03-13)<br>See claims 1, 7, 10-13 and 15; and paragraphs [0040], [0042], [0046], [0050], [0054], [0058], [0060], [0062], [0064], [0066], [0067] and [0151]. | 1-5,7-14 |
| Y | | 6 |
| Y | KR 10-2015-0083418 A (JEIO CO., LTD.) 17 July 2015 (2015-07-17)<br>See paragraphs [0006], [0051] and [0087]. | 6 |
| X | JP 2015-510666 A (NEXEON LIMITED) 09 April 2015 (2015-04-09)<br>See claims 1, 2, 11, 15, 20 and 25; and paragraphs [0013]-[0032], [0041], [0103]-[0129], [0134] and [0154]-[0166]. | 1-5,7-14 |
| A | JP 6344740 B2 (DENKA CO., LTD.) 20 June 2018 (2018-06-20)<br>See entire document. | 1-14 |

| ☑ | Further documents are listed in the continuation of Box C. | ☑ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 September 2021** | **13 September 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<tr><td colspan="3" align="center">**INTERNATIONAL SEARCH REPORT**</td><td>International application No.<br>**PCT/KR2021/006661**</td></tr>
<tr><td colspan="4">C.    **DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">US 2019-0260011 A1 (GRST INTERNATIONAL LIMITED) 22 August 2019 (2019-08-22)<br>See entire document.</td><td>1-14</td></tr>
</table>

Form PCT/ISA/210 (second sheet) (July 2019)

Form PCT/ISA/210 (patent family annex) (July 2019)

**INTERNATIONAL SEARCH REPORT**
Information on patent family members

International application No.

**PCT/KR2021/006661**

| Patent document cited in search report | | | Publication date (day/month/year) | Patent family member(s) | | | Publication date (day/month/year) |
|---|---|---|---|---|---|---|---|
| KR | 10-2020-0027787 | A | 13 March 2020 | CN | 112640160 | A | 09 April 2021 |
| | | | | EP | 3828964 | A1 | 02 June 2021 |
| | | | | WO | 2020-050661 | A1 | 12 March 2020 |
| KR | 10-2015-0083418 | A | 17 July 2015 | CN | 105873679 | A | 17 August 2016 |
| | | | | JP | 2017-501961 | A | 19 January 2017 |
| | | | | KR | 10-1756453 | B1 | 10 July 2017 |
| | | | | US | 2016-0325998 | A1 | 10 November 2016 |
| | | | | US | 9975774 | B2 | 22 May 2018 |
| | | | | WO | 2015-105302 | A1 | 16 July 2015 |
| JP | 2015-510666 | A | 09 April 2015 | CN | 104094453 | B | 17 May 2017 |
| | | | | CN | 104094454 | B | 01 February 2019 |
| | | | | EP | 2810321 | A1 | 10 December 2014 |
| | | | | EP | 2810322 | A1 | 10 December 2014 |
| | | | | JP | 2015-508934 | A | 23 March 2015 |
| | | | | KR | 10-2014-0128379 | A | 05 November 2014 |
| | | | | KR | 10-2014-0133529 | A | 19 November 2014 |
| | | | | TW | 201345028 | A | 01 November 2013 |
| | | | | US | 2015-0044571 | A1 | 12 February 2015 |
| | | | | WO | 2013-114094 | A1 | 08 August 2013 |
| | | | | WO | 2013-114095 | A1 | 08 August 2013 |
| JP | 6344740 | B2 | 20 June 2018 | CN | 104603992 | A | 06 May 2015 |
| | | | | KR | 10-2015-0052004 | A | 13 May 2015 |
| | | | | KR | 10-2121868 | B1 | 11 June 2020 |
| | | | | TW | 201415697 | A | 16 April 2014 |
| | | | | WO | 2014-034635 | A1 | 06 March 2014 |
| US | 2019-0260011 | A1 | 22 August 2019 | AU | 2017-352947 | A1 | 23 May 2019 |
| | | | | CA | 3041000 | A1 | 11 May 2018 |
| | | | | CN | 109923705 | A | 21 June 2019 |
| | | | | EP | 3535794 | A1 | 11 September 2019 |
| | | | | JP | 2019-537212 | A | 19 December 2019 |
| | | | | KR | 10-2019-0077399 | A | 03 July 2019 |
| | | | | KR | 10-2272893 | B1 | 05 July 2021 |
| | | | | SG | 11201911713 | A | 30 January 2020 |
| | | | | TW | 201822393 | A | 16 June 2018 |
| | | | | WO | 2018-082601 | A1 | 11 May 2018 |

**EP 4 109 593 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200071071
- KR 100794192